(19) Europäisches Patentamt / European Patent Office / Office européen des brevets

(11) **EP 4 699 986 A1**

(12) **EUROPEAN PATENT APPLICATION**
published in accordance with Art. 153(4) EPC

(43) Date of publication:
**25.02.2026 Bulletin 2026/09**

(51) International Patent Classification (IPC):
**C01G 53/00** (2025.01)    **H01M 4/525** (2010.01)
**H01M 4/505** (2010.01)    **B01J 19/00** (2006.01)
**H01M 4/02** (2006.01)

(21) Application number: **24927636.1**

(22) Date of filing: **27.09.2024**

(86) International application number:
**PCT/KR2024/014696**

(87) International publication number:
**WO 2026/010027 (08.01.2026 Gazette 2026/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.07.2024 KR 20240087256**

(71) Applicant: **Korea Zinc Co., Ltd.
Seoul 03159 (KR)**

(72) Inventors:
• **LEE, Je Joong**
  **Seoul 06041 (KR)**
• **KIM, Seung Hyun**
  **Ulsan 44536 (KR)**

(74) Representative: **Angerhausen, Christoph
Boehmert & Boehmert
Anwaltspartnerschaft mbB
Pettenkoferstrasse 22
80336 München (DE)**

(54) **MANUFACTURING METHOD FOR POSITIVE ELECTRODE ACTIVE MATERIAL PRECURSOR**

(57)    A method for manufacturing a positive electrode active material precursor comprises a nucleation step of forming nuclei of the precursor in a first reactor; and a nucleus growth step of growing the nuclei formed in the nucleation step in a second reactor, wherein the volume of the second reactor is larger than the volume of the first reactor.

## FIG. 2

**Description**

TECHNICAL FIELD

The present disclosure relates to a manufacturing method for a positive electrode active material precursor and, more specifically, to a manufacturing method for a positive electrode active material precursor by using a reactor.

BACKGROUND

In recent years, the expansion of the battery electric vehicle (BEV) market has led to a higher demand for secondary batteries. Secondary batteries usually include a positive electrode, a negative electrode, an electrolyte, and a separator, and the positive and negative electrodes contain an active material capable of intercalation and deintercalation of, for example, lithium ions. A representative example of the positive electrode active material is a lithium transition metal oxide, and for example, a lithium transition metal oxide may be manufactured by mixing a lithium precursor and a positive electrode active material precursor. Nickel-cobalt-manganese (NCM) compounds are widely used as positive electrode active material precursors.

The positive electrode active material precursor may be manufactured by performing a nucleation step and a nucleus growth step of growing formed nuclei in a reactor. Herein, unless otherwise stated, precursor particles may refer to the positive electrode active material precursor. Usually, after the nucleation step, the nucleus growth step is performed in the same reactor where the nucleation step was performed. Thus, the amount of positive electrode active material precursor produced is affected by the size of the reactor and the reaction time.

However, the increasing size of the reactor makes it more challenging to control the average particle diameter and particle size distribution of the precursor particles obtained through the nucleation and nucleus growth steps. Additionally, new nuclei may be continuously generated during the nucleus growth step, and the nuclei generated during the nucleus growth step may not grow sufficiently, resulting in issues with the average particle diameter and particle size distribution of the precursor particles. To avoid these problems, technologies have been developed to control the process conditions of the nucleation step and the nucleus growth step. However, the conventional art shows performing the nucleation and nucleus growth steps in the same reactor, which caused an inconvenience of having to reset the process conditions whenever transitioning from the nucleation step to the nucleation growth step. Moreover, the nucleation and growth in the same reactor caused a deterioration in the line of balance (LOB), thus reducing the amount of positive electrode active material precursor produced.

SUMMARY

The present disclosure aims to provide a manufacturing method for obtaining a positive electrode active material precursor having a uniform particle size distribution and increasing the amount of positive electrode active material precursor produced, whereby different reactors can be employed in a nucleation step and a nucleus growth step to maximize the amount of positive electrode active material precursor produced.

According to an aspect of the present disclosure, a method for manufacturing a positive electrode active material precursor may comprise a nucleation step of forming nuclei of the precursor in a first reactor; and a nucleus growth step of growing the nuclei formed in the nucleation step in a second reactor, wherein a volume of the second reactor may be larger than a volume of the first reactor.

According to an aspect of the present disclosure, the volume of the second reactor may be 3.7 to 9.2 times the volume of the first reactor.

According to an aspect of the present disclosure, the volume of the second reactor may be 33 $m^3$ to 55 $m^3$.

According to an aspect of the present disclosure, a time taken for the nucleation step may be shorter than a time taken for the nucleus growth step.

According to an aspect of the present disclosure, the first reactor may include a plurality of first reactors and the nucleation step may be performed in each of the plurality of first reactors, and in the nucleus growth step, the nuclei formed from each of the plurality of first reactors may be grown together in the second reactor.

According to an aspect of the present disclosure, each nucleation step performed in each of the plurality of first reactors may be performed simultaneously.

According to an aspect of the present disclosure, each nucleation step performed in each of the plurality of first reactors may be performed non-simultaneously.

According to an aspect of the present disclosure, the nucleation step may include a first nucleation step of forming nuclei of the precursor in the first reactor; and a second nucleation step of further forming nuclei of the precursor in the first reactor after the completion of the first nucleation step, and at least a part of the second nucleation step may be performed during a nucleus growth step of growing the nuclei formed in the first nucleation step.

According to an aspect of the present disclosure, the nucleation step may include a first nucleation step of forming nuclei of the precursor in the first reactor; and a second nucleation step of further forming nuclei of the precursor in the first reactor after the completion of the first nucleation step, and in the nucleus growth step, the nuclei formed in the first nucleation step and the nuclei formed in the second nucleation step may be grown simultaneously.

According to an aspect of the present disclosure, the method may further comprise a storage step of storing, in a storage tank, the nuclei formed in the nucleation step, and in the nucleus growth step, the nuclei stored in the storage step may be grown in the second reactor.

According to an aspect of the present disclosure, in the storage step, the nuclei may be stored at 40°C to 60°C.

According to an aspect of the present disclosure, in the storage step, the nuclei may be stored at a pH of 9.1 to 13.7.

According to an aspect of the present disclosure, the storage step may be performed for 48 hours or shorter.

According to an aspect of the present disclosure, the nucleation step may include supplying an initial reactant into the first reactor, and the initial reactant may be supplied such that a liquid level of the initial reactant is 20% to 30% of the height of the first reactor.

According to an aspect of the present disclosure, the nucleus growth step may include supplying an initial reactant into the second reactor, and the initial reactant may be supplied such that a liquid level of the initial reactant is 20% to 30% of the height of the second reactor.

According to various embodiments of the present disclosure, the line of balance and the amount of nuclei produced can be increased by using different reactors in a nucleation step and a nucleus growth step. Furthermore, the line of balance can be maximized by introducing a storage step between the nucleation step and the nucleus growth step.

BRIEF DESCRIPTION OF THE DRAWINGS

FIG. 1 is a schematic diagram illustrating a reactor according to an embodiment of the present disclosure.

FIG. 2 is a flow chart showing a manufacturing method for a positive electrode active material precursor according to an embodiment of the present disclosure.

FIG. 3 is a schematic diagram showing a first reactor and a second reactor when a nucleus growth step is performed after a nucleation step in FIG. 2.

FIG. 4 is a schematic diagram showing a first reactor, a storage tank, and a second reactor when a nucleus growth step is performed after a nucleation step and a subsequent storage step in FIG. 2.

DETAILED DESCRIPTION

In the description of the present disclosure, a detailed description of related known functions that are obvious to a person skilled in the art and would unnecessarily obscure the subject of the present disclosure are omitted.

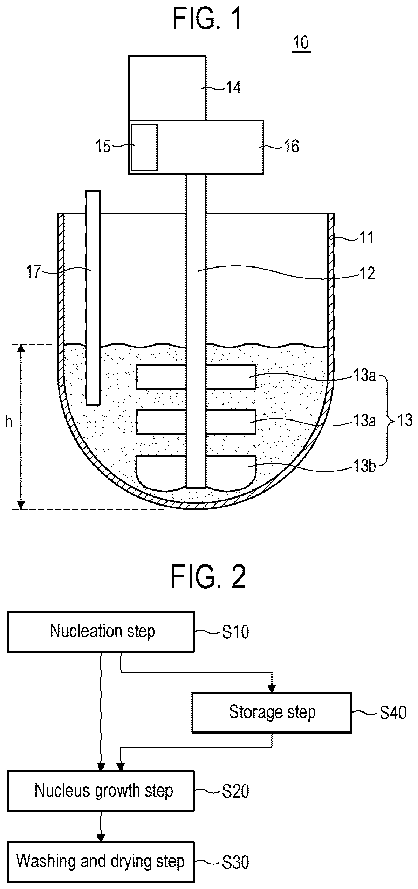

FIG. 1 is a schematic diagram illustrating a reactor according to an embodiment of the present disclosure. A reactor 10 in FIG. 1 may be used in a nucleation step and a nucleus growth step. The nucleation step and the nucleus growth step may employ reactors with different sizes, which may be similar in terms of the entire configuration and shape. Herein, the reactor 10 in the nucleation step may be referred to as a first reactor, and the reactor 10 in the nucleus growth step may be referred to as a second reactor.

Referring to FIG. 1, the reactor 10 may include a reaction vessel 11. The reaction vessel 11 may be a container into which reactants are supplied and the nucleation step and the nucleus growth step are performed. Herein, the volume of the reactor 10 may be defined as the volume of the reaction vessel 11.

The reactor 10 may include a mixing shaft 12, extending from the upper part to the lower part of the reaction vessel 11, and impellers 13. The impellers 13 may be two or more stages of impellers 13 with different levels, and for example, as shown in FIG. 1, three stages of impellers 13 may be mounted on the mixing shaft 12. A main motor 14 and a reducer 15 may provide power to the mixing shaft 12 to enable the impellers 13 to rotate in the reaction vessel 11. The two or more stages of impellers 13 may rotate, so that a slurry in the reaction vessel 11 can be evenly stirred throughout the entire area, that is, the lower area to the upper area, of the reaction vessel 11. For example, the lowest impeller 13b may have a wider width than the other upper impellers 13a. This structure can prevent the unreacted solution from remaining at the lower part of the reaction vessel 11 and achieve the production of precursors with uniform quality. The impellers 13 are not limited to the shape thereof, and may be designed in an optimal shape for effective stirring of the slurry. For example, each of the impellers 13 may have four blades.

A chiller 16 may be provided to reduce the load on the reducer 15. The chiller 16 may be provided between the reaction vessel 11 and the main motor 14, and the load on the reducer may be reduced by the circulation of cooling water through the chiller 16. The temperature in the chiller 16 may be monitored through a temperature sensor (not shown). For example, the chiller 16 may be in the form of a plurality of jackets (e.g., two).

A supply pipe 17 may extend from the upper area to the lower area in the reaction vessel 11. Through the supply pipe 17, an inert gas (e.g., nitrogen gas) may be supplied to the solution in a nucleation step and a nucleus growth step, and dissolved oxygen in the solution may be removed.

As the reaction may proceed by the introduction of reactants, the liquid level h of the solution in the reaction vessel 11 may increase. To reduce the load on the impellers 13 caused by the increase in liquid level, a flange coupling (not shown) may be further provided to the upper part of the reactor 10.

For example, the volume of the first reactor may be 6 $m^3$ to 9 $m^3$. Herein, the expression like "A to B" is used to mean "more than or equal to A but less than or equal to B". The first reactor may include three stages of impellers 13, and the width of the lowest impeller 13b may be 920 mm to 1,300 mm, which may be 1.05 to 1.3 times larger than those of the other upper impellers 13a. The lowest impeller 13b may be spaced apart from the bottom surface inside the reaction vessel 11 by 130 mm to 198 mm. The interval between the three stages of impellers 13 may be 700 mm to 1,050 mm.

For example, the volume of the second reactor may be 33 $m^3$ to 55 $m^3$. The second reactor may include three stages of impellers 13, and the width of the lowest impeller 13b may be 1,580 mm to 2,633 mm, which may be 1.05 to 1.3 times larger than those of the other upper impellers 13a. The lowest impeller 13b may be spaced apart from the bottom surface inside the reaction vessel 11 by 188 mm to 1,313 mm. The interval between the three stages of impellers 13 may be 1,300 mm to 2,167 mm.

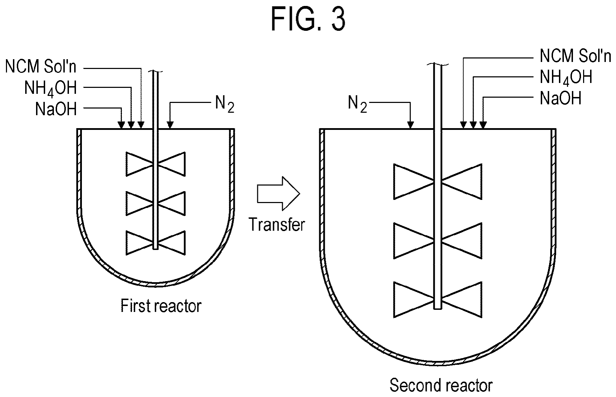

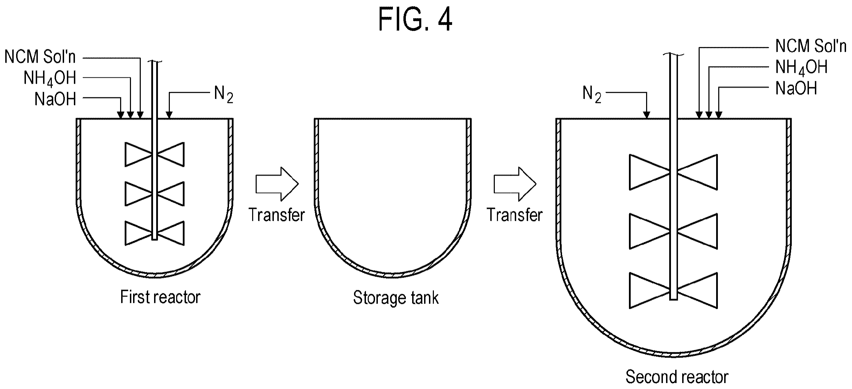

FIG. 2 is a flow chart showing a manufacturing method for a positive electrode active material precursor according to an embodiment of the present disclosure. FIG. 3 is a schematic diagram showing a first reactor and a second reactor when a nucleus growth step is performed after a nucleation step in FIG. 2. FIG. 4 is a schematic diagram showing a first reactor, a storage tank, and a second reactor when a nucleus growth step is performed after a nucleation step and a subsequent storage step in FIG. 2. Hereinafter, a manufacturing method for a positive electrode active material precursor according to an embodiment of the present disclosure will be described with reference to FIGS. 2 to 4.

**Nucleation step S10**

A nucleation step S10 may be performed in the first reactor. Nuclei for the positive electrode active material precursor may be formed through the nucleation step S10. Specifically, when a transition metal compound solution, a nitrogen-containing compound solution, and a basic compound solution may be introduced into the first reactor and stirred, transition metals in the transition metal compound solution may be co-precipitated to form precursor particle nuclei in the form of a transition metal hydroxide. Particularly, the stirring speed (e.g., the rotation speed of the mixing shaft) may be 10 rpm to 300 rpm. If the stirring speed is lower than 10 rpm, the reactants may mix insufficiently, thus hindering smooth nucleation. If the stirring speed is higher than 300 rpm, the friction between the impellers and the solution may increase, resulting in a large number of unnecessary micro-particles, consequently, failing to obtain precursor particles with uniform quality. During stirring, cooling water of 8°C or lower may be provided to reduce the load on the reducer.

In the nucleation step S10, the initial reactants for the nucleation reaction may be supplied into the first reactor. For example, the initial reactants may include deionized water, a nitrogen-containing compound solution, and a basic compound solution. The initial reactant may be supplied such that the liquid level is 20% to 30% of the height of the first reactor. If the liquid level of the initial reactants is lower than 20%, the friction between reactants to be subsequently introduced and the impellers may continuously occur, leading to the formation of a large number of unintended microparticles, resulting in a particle size difference due to the microparticles in the final product, ultimately causing a deterioration in quality of the final product. If the liquid level of the initial reactants is higher than 30%, the amount of reactants available for later addition may be reduced, resulting in a decrease in production amount. For example, when a reactor including three stages of impellers is used as the first reactor, the initial reactants may be supplied in an amount sufficient to submerge the lowest impeller and the middle impeller.

During the nucleation step S10, the temperature of the solution may be maintained at 40°C to 60°C. If the temperature of the solution is lower than 40°C, the reaction among the reactants may be reduced, resulting in a decrease in efficiency of nucleation. If the temperature of the solution is higher than 60°C, the formed nuclei may be coarse and may result in the non-uniform aggregation, ultimately decreasing the capacity and efficiency of the positive electrode active material.

The transition metal compound solution may contain at least one element selected from the group consisting of nickel, cobalt, and manganese. For example, the transition metal compound solution may contain a nickel-cobalt-manganese compound.

Examples of a transition metal-containing raw material may include at least one selected from the group of an acetate, a carbonate, a nitrate, a sulfate, a halite, a sulfide, an oxide, a hydrate, a hydroxide, and an oxyhydroxide of a transition metal, but are not limited thereto. Preferably, the transition metal-containing raw material may include a hydrate of a transition metal, and the hydrate of a transition metal has the advantage of being easy to store and use.

The transition metal compound solution may be prepared by dissolving a nickel-containing raw material, a cobalt-containing raw material, and a manganese-containing raw material in water. Examples of the nickel-containing raw material may include at least one selected from the group of $Ni(OH)_2$, $NiO$, $NiOOH$, $NiCO_3 \cdot 2Ni(OH)_2 \cdot 4H_2O$, $Ni\text{-}C_2O_2 \cdot 2H_2O$, $Ni(NO_3)_2 \cdot 6H_2O$, $NiSO_4$, $NiSO_4 \cdot 6H_2O$, fatty acid nickel salts, nickel halide, and combinations thereof. Examples of the cobalt-containing raw material may include at least one selected from the group of $CoSO_4$, $Co(OH)_2$, $CoOOH$, $Co(OCOCH_3)_2 \cdot 4H_2O$, $Co(NO_3)_2 \cdot 6H_2O$, $CoSO_4 \cdot 7H_2O$, $C_O(SO_4)_2 \cdot 7H_2O$, and combinations thereof. Examples of the manganese-containing raw material may include at least one selected from the group of manganese oxides, such as $Mn_2O_3$, $MnO_2$, and $Mn_3O_4$, manganese salts, such as $MnCO_3$, $Mn(NO_3)_2$, $MnSO_4$, $MnSO_4 \cdot H_2O$, manganese acetate, manganese dicarboxylate, manganese citrate, and fatty acid manganese salts, oxyhydroxides, manganese chloride, and combinations thereof. For example, $NiSO_4 \cdot 6H_2O$ may be used as the nickel-containing raw material, $CoSO_4 \cdot 7H_2O$ may be used as the cobalt-containing raw material, and $MnSO_4 \cdot H_2O$ may be used as the manganese-containing raw material.

When the positive electrode active material precursor further contains a metal element (M) other than nickel (Ni), manganese (Mn), and cobalt (Co), a raw material containing the metal element (M) may be optionally further added in the preparation of the transition metal compound solution. The metal element (M) may include at least one element selected from the group of W, Y, Ba, Ca, Mo, Cr, Al, Zr, Ti, Mg, Ta, and Nb. Examples of the metal element (M)-containing raw material may include at least one selected from the group of acetate salts, carbonate salts, nitrate salts, sulfate salts, halites, sulfides, hydroxides, oxyhydroxides and oxides of the metal element (M), but are not limited thereto.

The nitrogen-containing compound solution may contain an ammonium cation complex forming agent. The ammonium cation complex forming agent may include at least one compound selected from the group of $NH_4OH$, $(NH_4)_2SO_4$, $NH_4NO_3$, $NH_4Cl$, $CH_3COONH_4$, and $NH_4CO_3$. For example, the nitrogen-containing compound solution may be prepared by dissolving the ammonium cation complex forming agent in a solvent. Particularly, water or a mixture of water and an organic solvent (e.g., alcohol, etc.) may be used as the solvent.

The basic aqueous solution may include at least one selected from the group of hydrates of an alkali metal, hydroxides of an alkali metal, hydrates of an alkaline earth metal, and hydroxides of an alkaline earth metal. For example, the basic aqueous solution may be prepared by dissolving at least one selected from the group of NaOH, KOH, and $Ca(OH)_2$ in a solvent.

**Nucleus growth step S20**

A nucleus growth step S20 of growing the formed nuclei may be performed. The positive electrode active material precursor may reach a target size through the nucleus growth step S20. Specifically, when a transition metal compound solution, a nitrogen compound solution, and a basic compound solution are introduced into the second reactor and stirred, the precursor particle nuclei may be grown. Particularly, the stirring speed (e.g., the rotation speed of the mixing shaft) may be 10 rpm to 150 rpm. If the stirring speed is lower than 10 rpm, the reactants may mix insufficiently, thus hindering smooth nucleus growth. If the stirring speed is higher than 150 rpm, the friction between the impellers and the solution may increase, resulting in the new creation of unnecessary micro-particles, consequently, failing to obtain precursor particles with uniform quality. During stirring, cooling water of 8°C or lower may be provided to reduce the load on the reducer.

The nucleus growth step S20 may be separately performed in a reactor different from that used in the nucleation step S10, thereby increasing the line of balance compared with nucleation and nucleus growth performed in the same reactor.

During the nuclear growth step S20, initial reactants for the nuclear growth reaction may be supplied into the second reactor. For instance, the initial reactants may include deionized water, a nitrogen-containing compound solution, and a basic compound solution. The initial reactants may be supplied such that the liquid level is 20% to 30% of the height of the first reactor. If the liquid level of the initial reactants is lower than 20%, the friction between the reactants that are subsequently introduced and the impellers may continuously occur, leading to the formation of a large number of unintended microparticles, resulting in a particle size difference due to the microparticles in the final product, ultimately causing a decrease in quality of the final product. If the liquid level of the initial reactants is higher than 30%, the amount of reactants available for later addition may be reduced, resulting in a decrease in production amount. For example, when a reactor including three stages of impellers is used as the second reactor, the initial reactants may be supplied in an amount sufficient to submerge the lowest impeller and the middle impeller.

During the nucleus growth step S20, the temperature of the solution may be maintained at 40°C to 60°C. If the temperature of the solution is lower than 40°C, the reaction among the reactants may be reduced, resulting in a decrease in efficiency of nucleus growth. If the temperature of the solution is higher than 60°C, the growing nuclei may be coarse and may result in the non-uniform aggregation, ultimately decreasing the capacity and efficiency of the positive electrode active material.

As an example, the nucleus growth step S20 may be performed on the nuclei that were formed in the nucleation step S10 and then directly transferred from the first reactor to the second reactor. As another example, the nucleus growth step S20 may be performed on the nuclei that were formed in the nucleation step S10, transferred from the first reactor to the storage tank to undergo a storage step S40 to be described later, and then transferred into the second reactor.

Washing and drying step S30

Upon the completion of the nuclear growth step S20, the solution in the second reactor may be transferred and then subjected to a washing and drying step S30. Through the washing and drying step S30, unnecessary reaction byproducts and moisture in the solution may be removed, finally obtaining a positive electrode active material precursor.

Storage step S40

The nuclei formed in the nucleation step S10 may be transferred in the form of a reaction solution, from the first reactor to the storage tank and stored (storage step S40). Finally, in order to uniformly control the average particle diameter and particle size distribution of the precursor particles, the suppression of unintended nucleation and/or nucleus growth may be required in the storage step S40. To suppress nucleation and nucleus growth, the storage temperature, internal pH, and/or storage time in the storage step S40 may be controlled. As an example, the nuclei in the storage step may be stored at 40°C to 60°C. As an example, the nuclei in the storage step may be stored at a pH of 9.1 to 13.7. As an example, the storage step may be performed for 48 hours or shorter. Meeting the above numerical ranges during the storage step can suppress unintended nucleation and/or nucleus growth, resultantly facilitating the control of average particle diameter and particle size distribution of precursor particles. In FIG. 4, the volume of the storage tank is shown to be similar to that of the first reactor, but is not limited thereto, and storage tanks with various volumes may be used.

The storage step S40 may be optionally performed. As an example, the storage step S40 may not be performed, and in such a case, the nuclei formed in the first reactor may be directly transferred to the second reactor as shown in FIG. 3. As another example, the storage step S40 may be performed, and in such a case, the nuclei formed in the first reactor may be transferred to the storage tank, subjected to the storage step S40, and then transferred to the second reactor via the storage tank, as shown in FIG. 4.

The volume of the first reactor is denoted by V1, and the volume of the second reactor is denoted by V2. Particularly, V2 may be larger than V1. For example, V1 may be 6 m$^3$ to 9 m$^3$, and V2 may be 33 m$^3$ to 55 m$^3$. In a large reactor, the reaction between reactants may be usually difficult to control throughout the entire area in the reactor, thereby making it challenging to produce precursor particles with a desired size and distribution. However, in the present disclosure, the first reactor in the nucleation step S10 where the control of processes is difficult may be set to have a small volume, but the second reactor may be set to have a large volume, thereby growing a large amount of nuclei in a single second reactor alone. That is, the process conditions may be easily controlled by using a small-volume reactor in the nucleation step S10, while the production amount may be increased by using a large-volume reactor in the nucleus growth step S20.

For example, V2 may be 3.7 to 9.2 times V1. If V2 is less than 3.7 times V1, the volume of the second reactor may be insufficient, resulting in a slight increase in production, or the volume of the first reactor may be large, making it challenging to control the process conditions in the nucleation step S10. If V2 is more than 9.2 times V1, the second reactor may be too large, making it challenging to control the process conditions in the nucleus growth step S20, or the volume of the first reactor may be too small, thereby decreasing the progress speed and production in the nucleation step S10.

Since V2 is set to be larger than V1, the nucleation step S10 may be performed in multiple rounds in order to perform one round of nucleus growth step S20. That is, the line of balance can be increased by matching one round of nucleus growth step S20 and multiple rounds of nucleation step S10. Additionally, the time taken to perform one round of the nucleation step S10 (e.g., 24 hours) may be shorter than the time taken to perform one round of the nucleus growth step S20 (e.g., 48 hours). Particularly, the appropriate introduction of the storage step S40 can maximize the line of balance despite differences in volume and number of reactors and/or a difference in reaction time between the nucleation step S10 and the nucleus growth step S20. Hereinafter, examples are described where the line of balance is increased according to the concept of the present disclosure.

As an example, the nucleation step S10 may be performed in a plurality of first reactors in order to perform one round of the nuclear growth step S20. That is, the nuclei formed from each of the plurality of first reactors may be grown together in a single second reactor. Particularly, the nucleation step S10 in each of the plurality of first reactors may be performed simultaneously. In such a case, the formed nuclei may be transferred into the second reactor, with the storage step S40 skipped. Alternatively, the created nuclei may be transferred to the second reactor after undergoing the storage step S40 if the nucleus growth step S20 is not ready.

As another example, the nuclei formed from each of the plurality of first reactors may be grown together in a single second reactor. Particularly, the nucleation step S10 in each of the plurality of first reactors may be performed non-simultaneously. In such a case, the first formed nuclei may be stored in the storage tank, and after the completion of nucleation in each of the first reactors, the nuclei may be transferred to the second reactor. That is, even though the nuclei are formed at different timings in the plurality of first reactors, the nuclei may be grown in the same nucleus growth step S20 by utilizing the storage step S40. As a result, the line of balance can be increased in the nucleation step S10 and the nucleus growth step S20.

As still another example, a first nucleation step S10 may be performed in the first reactor. After the completion of the first nucleation step S10, a second nucleation step S10 for forming new nuclei may be performed in the first reactor, and the nucleus growth step S20 may be performed on the nuclei, formed through the first nucleation step S 10, in the second reactor. At least a part of the second nucleation step S10 may be performed during the performance of the nucleus growth step S20. That is, multiple rounds of nucleation step S10 may be continuously performed in the first reactor, separately from the nucleus growth step S20 performed in the second reactor. Furthermore, considering that the time taken to perform the nucleation step S10 is relatively short, the nucleation step S10 may be performed in more rounds than the nucleus growth step S20 during the same period. This can minimize the difference between the amount of nuclei produced and the amount of nuclei grown and maximize the line of balance, despite the difference between V1 and V2.

As still another example, a first nucleation step S10 may be performed in the first reactor. After the completion of the first nucleation step S10, a second nucleation step S10 for forming new nuclei may be performed in the first reactor, and the nuclei formed through the first nucleation step S10 may be stored in the storage tank. After the completion of the second nucleation step S10, the nucleus growth step S20 for simultaneously growing the nuclei formed through the first nucleation step S10 and the second nucleation step S10 may be performed in the second reactor. That is, by using the storage step S40, the nuclei formed through multiple rounds in one first reactor may be grown through one round of nucleus growth step S20. This can maximize the line of balance.

Hereinafter, the analysis results of particle size, specific surface area, and density of precursor particles in Examples 1 to 4 and a comparative example will be described. In Examples 1 to 4, the nucleation step S10 and the nucleus growth step S20 were performed in separate reactors according to the concept of the present disclosure. In the comparative example, nucleation and nucleus growth were performed in the same reactor. The process conditions for Examples 1 to 4 and a comparative example are as follows.

**[Example** 1]

A nucleation step S10 was performed in the first reactor with a volume of 6 m$^3$. Pure water, a 25% NaOH solution, and a 9% NH$_4$OH solution were supplied as initial reactants for the nucleation step S10. Hereinafter, the '%' indicating the concentrations of a solution (for example, NaOH solution or NH$_4$OH solution) means 'mass%'. The pure water was supplied to satisfy a numerical range of 1,713.6 kg to 2,570.4 kg, the 25% NaOH solution was supplied to satisfy a numerical range of 12.8 kg to 19.2 kg, and the 9% NH$_4$OH solution was supplied to satisfy a numerical range of 73.6 kg to 110.4 kg, and within the numerical ranges, the total amount of the initial reactants had a liquid level of 25% of the height of the first reactor.

Thereafter, a 2.4 M NCM solution, a 25% NaOH solution, and a 9% NH$_4$OH solution were introduced into the first reactor, wherein the flow rate of the 2.4 M NCM solution was controlled to 634.4 kg/hr to 951.6 kg/hr, the flow rate of the 25% NaOH solution was controlled to 360.0 kg/hr to 540.0 kg/hr, and the flow rate of the 9% NH$_4$OH solution was controlled to 44.8 kg/hr to 67.2 kg/hr. To make the average particle size D$_{50}$ of the formed nuclei close to a target value of 3.1 μm, the foregoing solutions were introduced for 24 hours. During the nucleation step S10, the temperature of the solution in the first reactor was maintained at 40°C to 60°C. The flow rate of the 25% NaOH solution introduced was controlled within a range of 2% of the supply flow rate such that the solution in the first reactor had a pH of 10.1 to 15.1 at the early stage and a pH of 9.1 to 13.7 at the later stage of the nucleation step S10. The pH value of the solution was measured based on 25°C, not the process temperature (i.e., 40°C to 60°C). To remove dissolved oxygen in the solution, nitrogen gas was introduced at 150 Nm$^3$/hr through a supply pipe. The rotation speed of the mixing shaft in the first reactor was set to 222 rpm when the reaction among the reactants began, and was gradually reduced to 175 rpm upon the completion of the reaction.

The nuclei formed in the nucleation step S10 were transferred to a storage tank, and then transferred to the second reactor, where the nucleus growth step S20 was performed. Pure water, a 25% NaOH solution, and a 9% NH$_4$OH solution were supplied as initial reactants for the nucleus growth step S20. The pure water was supplied to satisfy a numerical range of 11,720 kg to 17,580 kg, the 25% NaOH solution was supplied to satisfy a numerical range of 3,866.4 kg to 5,799.6 kg, and the 9% NH$_4$OH solution was supplied to satisfy a numerical range of 343.2 kg to 514.8 kg, and within the numerical ranges, the total amount of the initial reactants had a liquid level of 25% of the height of the second reactor.

Thereafter, a 2.4 M NCM solution, a 25% NaOH solution, and a 9% NH$_4$OH solution were introduced into the second reactor, wherein the flow rate of the 2.4 M NCM solution was controlled to 2,725.6 kg/hr to 4,088.4 kg/hr, the flow rate of the 25% NaOH solution was controlled to 1,536 kg/hr to 2,304 kg/hr, and the flow rate of the 9% NH$_4$OH solution was controlled to 239.2 kg/hr to 358.8 kg/hr. To make the average particle size D$_{50}$ of the formed nuclei close to a target value of 10.2 μm, the foregoing solutions were introduced for 48 hours. During the nucleus growth step S20, the temperature of the solution in the second reactor was maintained at 40°C to 60°C. To allow the solution in the second reactor to have a pH of 9.1 to 13.7, the flow rate of the 25% NaOH solution introduced was controlled within a range of 2% of the supply flow rate, the flow rate of the 9% NH$_4$OH solution was controlled within a range of 16% of the supply flow rate, and the 2.4 M NCM solution was controlled to be maintained. The pH value of the solution was measured based on 25°C, not the process temperature (i.e., 40°C to 60°C). To remove dissolved oxygen in the solution, nitrogen gas was introduced at 600 Nm$^3$/hr

through a supply pipe. The rotation speed of the mixing shaft in the second reactor was set to 86 rpm when the reaction among the reactants began, and was gradually reduced to 27 rpm upon the completion of the reaction.

The precursor particles formed through the nucleation step S10 and the nucleus growth step S20 were subjected to a washing and drying step S30. Specifically, pure water was supplied to a filter press under conditions of 4.8 MPa to 7.2 MPa three times for 10 to 15 minutes each, thereby washing out Na remaining in the precipitation solution. Afterwards, air blowing was conducted three times for 10 to 15 minutes each, thereby reducing the moisture content in the NCM precursor.

**[Example 2]**

Unlike in Example 1, the nucleation step S10 was performed in a first reactor with a volume of 9 m$^3$. Since the volume of the first reactor was changed, the amounts of initial reactants supplied were changed unlike in Example 1. Specifically, pure water, a 25% NaOH solution, and a 9% $NH_4OH$ solution were supplied to satisfy a numerical range of 2,570.4 kg to 3,855.6 kg, a numerical range of 20 kg to 30 kg, and a numerical range of 110.4 kg to 165.6 kg, respectively. The flow rates of reactants introduced were also changed. Specifically, the flow rates of a 2.4 M NCM solution, a 25% NaOH solution, and a 9% $NH_4OH$ solution were controlled to satisfy a numerical range of 951.6 kg/hr to 1,427.4 kg/hr, a numerical range of 540 kg/hr to 810 kg/hr, and a numerical range of 67.2 kg/hr to 100.8 kg/hr, respectively. The other process conditions were controlled to be the same as in Example 1.

**[Example 3]**

Unlike in Example 1, the nucleus growth step S20 was performed in a second reactor with a volume of 55 m$^3$. Since the volume of the second reactor was changed, the amounts of initial reactants supplied were changed unlike in Example 1. Specifically, pure water, a 25% NaOH solution, and a 9% $NH_4OH$ solution were supplied to satisfy a numerical range of 19,531 kg to 29,297 kg, a numerical range of 6,443.4 kg to 9,665 kg, and a numerical range of 572 kg to 858 kg, respectively. The flow rates of reactants introduced were also changed. Specifically, the flow rates of a 2.4 M NCM solution, a 25% NaOH solution, and a 9% $NH_4OH$ solution were controlled to satisfy a numerical range of 4,542.6 kg/hr to 6,813.8 kg/hr, a numerical range of 2,559 kg/hr to 3,838.6 kg/hr, and a numerical range of 398.6 kg/hr to 598 kg/hr, respectively. The other process conditions were controlled to be the same as in Example 1.

**[Example 4]**

In Example 4, the nucleation step S10 was performed in a first reactor with a volume of 9 m$^3$, like in Example 2. Therefore, the amounts of initial reactants supplied and the flow rates of reactants introduced were set according to the same standard as used for the nucleation step S10 in Example 2. Additionally, in Example 4, the nucleus growth step S20 was performed in a second reactor with a volume of 55 m$^3$, like in Example 3. Therefore, the amounts of initial reactants supplied and the flow rates of reactants introduced were set according to the same standard as used for the nucleus growth step S20 in Example 3. The other process conditions were controlled to be the same as in Example 1.

**[Comparative Example]**

In a comparative example, nucleation and nucleus growth were performed in a single reactor with a volume of 11 m$^3$. The nucleation was performed under the same conditions as in the nucleation step S10 in Example 1 except for the conditions associated with the volume of the reactor. As for nucleus growth, in addition to the conditions associated with the volume of the reactor, the supply of initial reactants was omitted, unlike in Example 1. The flow rates of a 2.4 M NCM solution, a 25% NaOH solution, and a 9% $NH_4OH$ solution were controlled to satisfy a numerical range of 908 kg/hr to 1,363.2 kg/hr, a numerical range of 512 kg/hr to 768 kg/hr, and a numerical range of 79.8 kg/hr to 120 kg/hr, respectively.

The particle sizes, specific surface areas, and densities of the precursor particles in Examples 1 to 4 and the comparative example employing the above-described process conditions are shown in Table 1 below.

TABLE 1

| Item | | Unit | Example 1 | Example 2 | Example 3 | Example 4 | Comparative Example |
|---|---|---|---|---|---|---|---|
| Particle size analysis | $D_{min}$ | $\mu$m | 0.4 | 0.4 | 0.4 | 0.4 | 0.4 |
| | $D_{10}$ | | 7.7 | 7.7 | 7.8 | 7.7 | 7.6 |
| | $D_{50}$ | | 10 | 9.8 | 10.1 | 10 | 10.1 |
| | $D_{90}$ | | 12.7 | 12.2 | 12.3 | 12.3 | 12.6 |
| | $D_{max}$ | | 17.2 | 16 | 16.2 | 16.5 | 16.4 |
| | Span | | 0.5 | 0.47 | 0.52 | 0.51 | 0.53 |
| Specific surface area | BET | $m^2$/g | 9.5 | 9.4 | 9.7 | 9.6 | 9.6 |
| Density | Tap Density | g/cm$^3$ | 2 | 2.02 | 2.08 | 2.05 | 2.1 |

Referring to Table 1, $D_{50}$ represents the average particle diameter of particles, and Examples 1 to 4 each showed a $D_{50}$ value of about 10, which was close to 10.1, the $D_{50}$ value of the comparative example. Additionally, the examples showed $D_{min}$, $D_{10}$, $D_{90}$, and $D_{max}$ values close to those in the comparative example, in addition to the $D_{50}$ value. Therefore, the Span value, which is defined by Equation 1 and indicates the uniformity of particle size, was also similar for the examples and the comparative example.

[Equation 1]

$$\text{Span} = (\text{particle diameter } D_{90} - \text{particle diameter } D_{10}) / \text{particle diameter } D_{50}$$

Furthermore, the values of the specific surface area and density of a precursor were similar for the examples and the comparative example.

While the present disclosure has been described in connection with some embodiments thereof, it shall be understood that various modifications and variations can be made without departing from the spirit and scope of the present disclosure, which may be apparent to a person skilled in the art to which the present disclosure belongs. It shall also be understood that such modifications and variations belong to the scope of the claims appended hereto.

**Claims**

1.    A manufacturing method for a positive electrode active material precursor, the method comprising:

    a nucleation step of forming nuclei of the precursor in a first reactor; and
    a nucleus growth step of growing the nuclei formed in the nucleation step in a second reactor,
    wherein a volume of the second reactor is larger than a volume of the first reactor.

2.    The method of claim 1, wherein the volume of the second reactor is 3.7 to 9.2 times the volume of the first reactor.

3.    The method of claim 1, wherein the volume of the second reactor is 33 m$^3$ to 55 m$^3$.

4.    The method of claim 1, wherein a time taken for the nucleation step is shorter than a time taken for the nucleus growth step.

5.    The method of claim 1, wherein the first reactor includes a plurality of first reactors and the nucleation step is performed in each of the plurality of first reactors, and,
    wherein, in the nucleus growth step, the nuclei formed from each of the plurality of first reactors are grown together in the second reactor.

6.    The method of claim 5, wherein each nucleation step performed in each of the plurality of first reactors is performed simultaneously.

7. The method of claim 5, wherein each nucleation step performed in each of the plurality of first reactors is performed non-simultaneously.

8. The method of claim 1, wherein the nucleation step includes:

   a first nucleation step of forming nuclei of the precursor in the first reactor; and
   a second nucleation step of further forming nuclei of the precursor in the first reactor after the completion of the first nucleation step, and
   wherein at least a part of the second nucleation step is performed during a nucleus growth step of growing the nuclei formed in the first nucleation step.

9. The method of claim 1, wherein the nucleation step includes:

   a first nucleation step of forming nuclei of the precursor in the first reactor; and
   a second nucleation step of further forming nuclei of the precursor in the first reactor after the completion of the first nucleation step, and
   wherein in the nucleus growth step, the nuclei formed in the first nucleation step and the nuclei formed in the second nucleation step are grown simultaneously.

10. The method of claim 1, further comprising a storage step of storing, in a storage tank, the nuclei formed in the nucleation step,
    wherein in the nucleus growth step, the nuclei stored in the storage step are grown in the second reactor.

11. The method of claim 10, wherein in the storage step, the nuclei are stored at 40°C to 60°C.

12. The method of claim 10, wherein in the storage step, the nuclei are stored at a pH of 9.1 to 13.7.

13. The method of claim 10, wherein the storage step is performed for 48 hours or shorter.

14. The method of claim 1, wherein the nucleation step includes supplying an initial reactant into the first reactor, and the initial reactant is supplied such that a liquid level of the initial reactant is 20% to 30% of the height of the first reactor.

15. The method of claim 1, wherein the nucleus growth step includes supplying an initial reactant into the second reactor, and the initial reactant is supplied such that a liquid level of the initial reactant is 20% to 30% of the height of the second reactor.

# FIG. 1

# FIG. 2

# FIG. 3

# FIG. 4

First reactor — Transfer → Storage tank — Transfer → Second reactor

First reactor inputs: NCM Sol'n, $NH_4OH$, NaOH, $N_2$

Second reactor inputs: $N_2$, NCM Sol'n, $NH_4OH$, NaOH

EP 4 699 986 A1

## INTERNATIONAL SEARCH REPORT

| International application No. |
| --- |
| **PCT/KR2024/014696** |

| **A.** | **CLASSIFICATION OF SUBJECT MATTER** |
| --- | --- |
| | **C01G 53/00**(2006.01)i; **H01M 4/525**(2010.01)i; **H01M 4/505**(2010.01)i; **B01J 19/00**(2006.01)i; **H01M 4/02**(2006.01)i |

According to International Patent Classification (IPC) or to both national classification and IPC

| **B.** | **FIELDS SEARCHED** |
| --- | --- |

Minimum documentation searched (classification system followed by classification symbols)

C01G 53/00(2006.01); B01J 19/00(2006.01); B01J 8/00(2006.01); C01G 53/04(2006.01); H01M 10/052(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1 반응기(first reactor), 제2 반응기(second reactor), 용량(volume), 핵(seed), 성장 (growth), 양극 활물질 전구체(cathode active material precursor)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| X | KR 10-2021-0039962 A (LG CHEM, LTD.) 12 April 2021 (2021-04-12) claims 1, 3; paragraphs [0028], [0073]-[0181]; example 1; figure 1 | 1-4,8,9,14,15 |
| Y | | 5-7,10-13 |
| Y | KR 10-2008875 B1 (POSCO et al.) 08 August 2019 (2019-08-08) claim 1; paragraph [0002]; figure 3 | 5-7 |
| Y | KR 10-2024-0075111 A (ECOPRO MATERIALS, CO., LTD.) 29 May 2024 (2024-05-29) abstract; paragraph [0053]; figure 3 | 10-13 |
| A | KR 10-2018-0055258 A (POSCO et al.) 25 May 2018 (2018-05-25) abstract; paragraphs [0047]-[0068]; figure 1 | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 March 2025** | **28 March 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 699 986 A1**

## INTERNATIONAL SEARCH REPORT

| International application No. |
|---|
| **PCT/KR2024/014696** |

### C.    DOCUMENTS CONSIDERED TO BE RELEVANT

| Category* | Citation of document, with indication, where appropriate, of the relevant passages | Relevant to claim No. |
|---|---|---|
| A | US 2023-0391635 A1 (GUANGDONG BRUNP RECYCLING TECHNOLOGY CO., LTD. et al.) 07 December 2023 (2023-12-07)<br>paragraphs [0037]-[0040]; example 1 | 1-15 |
| A | KR 10-2022-0159228 A (ECOPRO MATERIALS, CO., LTD.) 02 December 2022 (2022-12-02)<br>claims 1-9; figure 3 | 1-15 |

Form PCT/ISA/210 (second sheet) (July 2022)

15

**INTERNATIONAL SEARCH REPORT**
Information on patent family members

International application No.

**PCT/KR2024/014696**

| Patent document cited in search report | | | Publication date (day/month/year) | Patent family member(s) | | | Publication date (day/month/year) |
|---|---|---|---|---|---|---|---|
| KR | 10-2021-0039962 | A | 12 April 2021 | CN | 113784927 | A | 10 December 2021 |
| | | | | EP | 3950600 | A1 | 09 February 2022 |
| | | | | EP | 3950600 | B1 | 17 January 2024 |
| | | | | JP | 2022-530869 | A | 04 July 2022 |
| | | | | JP | 7384540 | B2 | 21 November 2023 |
| | | | | US | 11855287 | B2 | 26 December 2023 |
| | | | | US | 2022-0209232 | A1 | 30 June 2022 |
| | | | | WO | 2021-066576 | A1 | 08 April 2021 |
| KR | 10-2008875 | B1 | 08 August 2019 | CN | 111683743 | A | 18 September 2020 |
| | | | | CN | 111683743 | B | 09 August 2022 |
| | | | | EP | 3733274 | A1 | 04 November 2020 |
| | | | | EP | 3733274 | B1 | 07 August 2024 |
| | | | | EP | 3733274 | B8 | 18 September 2024 |
| | | | | JP | 2021-509083 | A | 18 March 2021 |
| | | | | JP | 7062768 | B2 | 06 May 2022 |
| | | | | PL | 3733274 | T3 | 04 November 2024 |
| | | | | US | 2020-0373556 | A1 | 26 November 2020 |
| | | | | WO | 2019-132331 | A1 | 04 July 2019 |
| KR | 10-2024-0075111 | A | 29 May 2024 | None | | | |
| KR | 10-2018-0055258 | A | 25 May 2018 | KR | 10-1904305 | B1 | 04 October 2018 |
| US | 2023-0391635 | A1 | 07 December 2023 | CN | 113823779 | A | 21 December 2021 |
| | | | | CN | 113823779 | B | 13 June 2023 |
| | | | | DE | 112022000292 | T5 | 14 September 2023 |
| | | | | ES | 2968774 | A2 | 13 May 2024 |
| | | | | GB | 2617727 | A | 18 October 2023 |
| | | | | HU | P2400101 | A1 | 28 June 2024 |
| | | | | WO | 2023-020043 | A1 | 23 February 2023 |
| KR | 10-2022-0159228 | A | 02 December 2022 | None | | | |

Form PCT/ISA/210 (patent family annex) (July 2022)